# EUROPEAN PATENT APPLICATION

(11) **EP 4 144 514 A1**
(43) Date of publication of application: **08.03.2023**
(21) Application number: 21195201.5
(22) Date of filing: 07.09.2021
(51) Int. Cl.: B29D 99/00, B29C 70/52, B29C 70/00

(54) **MULTICOMPONENT RESIN SYSTEM FOR MANUFACTURING PULTRUDED WIND TURBINE BLADE COMPONENTS**

(71) Applicant: LM Wind Power A/S, 6000 Kolding (DK)
(72) Inventor: BAVILOLIAIE, Mahdi, 6000 Kolding (DK)
(74) Representative: COPA Copenhagen Patents

(57) **Abstract**

The present invention relates to a method of manufacturing a wind turbine blade and to pultruded blade components used in said method. One or more pultruded blade components can be manufactured in a pultrusion process comprising contacting a fibre material (68) with a multicomponent resin system, and curing the multicomponent resin system to form a fibrereinforced vinyl ester urethane composite. The pultruded blade component (64) comprising the cured vinyl ester urethane resin can be arranged within the blade shell component (38).

## Description

### Field of the Invention

The present invention relates to a method of manufacturing a wind turbine blade including forming at least one pultruded blade component using a multicomponent resin system. The present invention also relates to a wind turbine blade comprising a spar cap including a plurality of pultruded plates comprising a carbon fibre-reinforced vinyl ester urethane composite.

### Background of the Invention

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 meters in length.

Wind turbine blades are usually manufactured by forming two shell parts or shell halves from layers of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure side halves of the shell.

As the size of wind turbine blades increases, various challenges arise from such blades being subjected to increased forces during operation, requiring improved reinforcing and attachment structures. In some known solutions, pultruded fibrous strips of material are used. Pultrusion is a continuous process in which fibres are pulled through a supply of liquid resin and then heated in an open chamber where the resin is cured. Such pultruded strips can be cut to any desired length. The pultrusion process is typically characterized by a continuous process that produces composite parts having a constant cross-section. Thus, a plurality of pultruded parts can be vacuum infused together in a mould to form the spar caps.

However, forming blade components by pultrusion, using known methods, poses a number of challenges. For example, the manufacturing speed of the pultrusion process is often quite slow. Also, the impregnation of fibre material, in particular of carbon fibre material can be tedious and incomplete, thus creating the risk of ending up with patches of dry fibres, which compromises the overall quality and stability of the pultruded blade component. In addition, known pultrusion processes are only feasible with a comparatively low fibre volume fraction.

It is therefore an object of the present invention to provide a method of manufacturing a wind turbine blade which overcomes one or more of the above-discussed disadvantages.

It is another object of the present invention to provide a reinforcing structure for a wind turbine blade which is a cost efficient structure and has optimized material characteristics.

It is another object of the present invention to provide a suitable blade components, such as a reinforcing structure, for a wind turbine blade which can be manufactured efficiently.

### Summary of the invention

It has been found that one or more of the aforementioned objects can be obtained by providing a method of manufacturing a wind turbine blade, the method comprising the steps of providing a wind turbine blade shell component, forming at least one pultruded blade component in a pultrusion process comprising contacting a fibre material with a multicomponent resin system, and curing the multicomponent resin system to form a fibre-reinforced vinyl ester urethane composite, and arranging the pultruded blade component within the blade shell component.

The present inventors have found that this method provides a more efficient manufacturing process of pultruded blade components, such as pultrusion planks for a spar cap. Specifically, it was found that the production speed of the pultrusion process can be significantly increased, such as doubled, as compared to prior art processes. Thus, it was observed that the speed of the pultrusion process could be roughly doubled from 0.5 m/min to 1 m/min.

It was also found that the fibre impregnation process during pultrusion of the blade components is significantly improved when using the multicomponent resin system of the present invention. This results in a reduction or elimination of dry fibre patches within the pultruded part. Furthermore, the toughness of the resulting pultruded product, such as pultrusion planks and spar caps formed thereof, appears to be greatly enhanced.

Also, the method of the present invention allows for an increase in fibre volume fraction in the pultrusion process. For example, when producing a carbon fibre-reinforced spar cap using the methods of the present invention its was found that the fibre volume fraction can be increased from about 62% carbon fibres by volume to about 68-70% carbon fibres.

The wind turbine blade of the present invention will typically comprise a pressure side, a suction side, a leading edge, and a trailing edge extending between a tip and a root. Usually, the wind turbine blade comprises a pressure side shell half and a suction side shell half, wherein the suction and pressure side shell halves are joined along a leading and a trailing edge of the blade. Both of the suction and pressure side shell halves usually include a reinforcing structure, such as a spar cap or main laminate bonded to an interior surface of the shell half, wherein the spar cap can be formed from a plurality of pultrusion plates according to the present invention. The pultrusion plates preferably have a continuous unbroken length along an entire length of the spar cap.

The blade shell components, preferably the shell halves, will typically be produced by infusing a fibre lay-up of fibre material with a resin such as epoxy, polyester or vinyl ester. Usually, the pressure side shell half and the suction side shell half are manufactured using a blade mould. Each of the shell halves may comprise spar caps or main laminates provided along the respective pressure and suction side shell members as reinforcing structures. The spar caps or main laminates may be affixed to the inner faces of the shell halves, after moulding the shell halves. The spar structure is typically a longitudinally extending load carrying structure, preferably comprising a beam or spar box for connecting and stabilizing the shell halves. The spar structure may be adapted to carry a substantial part of the load on the blade. In some embodiments, the reinforcing structure is arranged within the pressure side shell half. In some embodiments, the reinforcing structure is arranged within the suction side shell half. According to some embodiments, the pressure side shell half and the suction side shell half each have a longitudinal extent L of 50-100 m, preferably 60-90 m.

Typically, the blade shell component is a shell half or a part thereof. The pultruded blade component is preferably a pultruded plank comprising carbon fibres for forming a spar cap of the wind turbine blade. In other embodiments, the pultruded blade component is an embedding element comprising glass fibres for arrangement within a root region of the blade. The root region includes the root end of the blade, and preferably extends from the root end for a spanwise distance of up to 5 meters.

The pultrusion process comprises contacting a fibre material with the multicomponent resin system, including a reaction product thereof, such as a vinyl ester urethane resin, and curing the multicomponent resin system to form a fibre-reinforced vinyl ester urethane composite.

Preferably, during the pultrusion process, the fibre material is impregnated with the multicomponent resin system, including a reaction product thereof. The pultrusion process may further comprise pulling a continuous pultrusion string comprising the fibre material through a resin container or reservoir containing the multicomponent resin system, including a reaction product thereof, and through a shaping die.

The pultruded blade components, for example a plurality of pultruded planks, can be arranged within the blade shell component, such as within a pressure side shell half or a suction side shell half. Preferably, a plurality of pultruded blade components are arranged within the blade shell component, such as at least 10, or at least 25 pultruded blade components. In a particularly preferred embodiment, a plurality of pultruded blade components is arranged within the blade shell component, for example within a pressure side shell half or a suction side shell half, to form a spar cap of said blade shell component.

The multicomponent resin system of the present invention comprises at least two components, preferably at least three components, or at least four component. In a preferred embodiment, the multicomponent resin system comprises a vinyl ester compound, preferably a vinyl ester resin, and an isocyanate compound. It is particularly preferred that the components of the multicomponent resin system are capable of reacting to form a vinyl ester-urethane hybrid resin, such as a bisphenol A vinyl ester urethane resin. Thus, in a preferred embodiment, the multicomponent resin system contains two or more components which are capable of reacting with each other to form a vinyl ester-urethane hybrid resin.

It is preferred that the vinyl ester resin constitutes 10-40% by weight of the multicomponent resin system. In some embodiments, the vinyl ester compound comprises a monomer, oligomer or polymer containing at least one (meth)acrylate functional end group. It is preferred that the multicomponent resin system has a glass transition temperature (10° C/min) of 150-250°C, preferably 180-220°C, as determined according to ISO 11357-1/-2.

In a preferred embodiment, the vinyl ester compound comprises a vinyl ester resin. In some embodiment, the vinyl ester comprises a bisphenol-A-based styrene-diluted vinyl ester, for example of the bismethacryloxy type. Preferably, the vinyl ester resin has a glass transition temperature (10° C/min) of 190-210°C as determined according to ISO 11357-1/-2. It is also preferred that the vinyl ester resin has an acid number of at most 10, such as equal to or lower than 5, as determined according to DIN 53402,

According to a preferred embodiment, the vinyl ester resin comprises hydroxyl groups corresponding to an OH-number of at least 10, preferably an OH-number in the range of from 100 to about 300, as determined according to DIN 53240. In a preferred embodiment, the vinyl ester resin is Daron 45 from Aliancys.

In some embodiments, the isocyanate compound is an aliphatic isocyanate selected from hexamethylene diisocyanate, cyclohexane diisocyanate, isophorone diisocyanate, and dicyclohexymethane diisocyanate. In other embodiments, the isocyanate compound is an aromatic isocyanate selected from diphenylmethane diisocyanate and diisocyanatotoluene and their isomer mixtures, polyphenyl-polymethylene-polyisocyanates, and diisocyanato-naphthalene.

In a preferred embodiment, the isocyanate compound of the multicomponent resin system is a polymeric isocyanate, such as a polymeric methylene phenylisocyanate resin. In some embodiments, the isocyanate compound is polymeric methylene diphenyl diisocyanate. For example, the isocyanate compound can be Daron XP 40-B-1 from DSM Composite Resins, Schaffhausen, Switzerland.

In a preferred embodiment, the multicomponent resin system comprises a peroxide, which may act as an initiator and/or a catalyst, such as an organic peroxide, such as a peroxyester. In one embodiment, the peroxide is a ketone peroxide, such as methyl ethyl ketone peroxide.

In a preferred embodiment, the multicomponent resin system comprises an isocyanate, preferably a polyfunctional isocyanate, and a hydroxyalkyl (meth)acrylate, optionally a polyhydric alcohol, and optionally a polyamine. It is preferred that the ratio of isocyanate to (alcohol+amine) is preferably from 100:0 to 100:300, by weight. In some embodiments, the multicomponent resin system comprises a hydroxy substituted (meth)acrylate, such as a hydroxyalkyl(meth)acrylate, such as hydroxypropyl(meth)acrylate or hydroxyethyl(meth)acrylate. In some embodiments, the ratio of equivalents of the hydroxyalkyl (meth)acrylate to the free isocyanate groups in the reaction product is from 3:1 to 1:2.

The multicomponent resin system may further comprise at least one diluent, such as a vinyl-type reactive diluent, preferably styrene. In some embodiments, the multicomponent resin system comprises a difunctional methacrylate diluent, preferably selected from 1,4-butanediol dimethacrylate, neopentylglycol dimethacrylate, PEG200 dimethacrylate, triethylene glycol dimethacrylate and tripropylene glycol dimethacrylate. In a preferred embodiment, the multicomponent resin system comprises a monofunctional methacrylate preferably selected from tetrahydro furfuryl methacrylate, hydroxyl ethyl methacrylate and hydroxyl propyl methacrylate.

The multicomponent resin system may comprise a difunctional, polymerizable hydroxyvinyl ester, such as 1,4 butanediol methacrylate or ethoxylated 2-bisphenol A dimethacrylate. In a preferred embodiment, the multicomponent resin system further comprises a polymerization initiator or catalyst. In a preferred embodiment, the polymerization initiator is bis(4-tert-butylcyclohexanyl) peroxydicarbonate.

In some embodiments, the multicomponent resin system further comprises a release agent. In a preferred embodiment, the multicomponent resin system further comprises an inhibitor or mixture of inhibitors.

In a preferred embodiment, the urethane of the fibre-reinforced vinyl ester urethane composite is formed from reactants in the multicomponent resin system comprising a polyol, a polyisocyanate, and optionally a chain extender.

It is preferred that all reactants of the multicomponent resin system are (pre-)mixed in a container before being contacted with the fibre material. For example, a plurality of pumps can be used, each pump delivering one or more components of the multicomponent resin system to a mixing container or reservoir for (pre-)mixing the components to obtain the multicomponent resin.

In a preferred embodiment, the multicomponent resin system further comprises a polyol compound. The polyol compound may be a polyether polyol or a polyester polyol.

In a preferred embodiment, the fibre material comprises carbon fibres. In another preferred embodiment, the fibre material comprises glass fibres. The fibre material may also comprise a mixture of carbon and glass fibres.

In a preferred embodiment, the pultruded blade component is a pultrusion plate, wherein the step of arranging the pultruded blade component within the blade shell component comprises arranging a plurality of the pultrusion plates within the blade shell component, and bonding the pultrusion plates to the blade shell component, such as a pressure side shell half or a suction side shell half. In a particularly preferred embodiment, the plurality of pultrusion plates forms a spar cap of the wind turbine blade.

The fibre material preferably comprises a carbon fibre material, thus the pultrusion plate preferably comprises a carbon fibre material. In some embodiments, the carbon fibre material is the only fibre material of the pultrusion plate. In other embodiments, the pultrusion plate comprises both carbon fibres and glass fibres. In some embodiments, the ratio of carbon fibre material to glass fibre material in the pultrusion plate is between 1/3 to 1/1. This was found to provide optimised properties of the pultrusion plate in terms of electrical conductivity and overall stiffness.

The step of arranging the pultruded blade component, such as the pultrusion plates, within the blade shell component preferably comprises arranging the pultruded blade components into adjacent stacks of pultruded blade component, wherein adjacent refers to a substantially chordwise direction. These stacks usually extend in a substantially spanwise direction of the shell half. This is preferably followed by a step of bonding the pultruded blade component with the blade shell material to form the blade shell component, wherein the bonding step usually comprises a resin infusion step in which the pultruded blade components and the blade shell material are infused with a resin, for example in a VARTM process.

In a preferred embodiment, each pultrusion plate comprises glass fibres and carbon fibres. In addition, each pultrusion plate preferably comprises the cured vinyl ester urethane resin of the present invention, which is used in the pultrusion process for joining the various fibre tows into a single pultrusion string. Preferably, each pultrusion plate comprises a matrix of fibre tows arranged in columns and rows, as seen in a vertical cross section of the plate. Typically, the pultrusion plate has a constant cross-section along its length.

In a preferred embodiment, the pultrusion plates are arranged into adjacent stacks of pultrusion plates. Each stack of pultrusion plates, forming the spar cap, may comprise 2-30, such as 5-20 pultrusion plates successively arranged on top of each other. Thus, each stack will usually extend in a spanwise direction of the blade. In a midsection between a root end and a tip end, each stack may comprise 8-15 layers of pultrusion plates, whereas towards the root end and towards the tip end the number of layered pultrusion plates may decrease to 1-3. Thus, the stack of pultrusion plates is preferably tapered towards both the root end and the distal end. Such configuration advantageously allows for a profile that is consistent with the thickness profile of the shell. Typically, two or more, or three or more stacks of pultrusion plates are arranged next to each other, adjacent to each other in a substantially chordwise direction. Typically, a resin will be infused in the stack of pultrusion plates after arranging the pultruded blade components, i.e. the pultrusion plates, within the blade shell component. This can, for example, be done using vacuum-assisted resin transfer moulding.

The blade shell component is usually a shell half, which may include one or more fibre layers and/or a gelcoat. The plurality of pultrusion plates will typically extend in a spanwise direction of the shell half or of the blade. Thus, at least some of the pultrusion plates have preferably a length corresponding to 60-95% of the blade length. A polymer resin is typically infused into pultrusion plates following the lay-up into the shell half.

In a preferred embodiment, each pultrusion plate comprises a top surface, an opposing bottom surface and two lateral surfaces. Usually, the top and bottom surfaces face opposing flapwise directions, whereas the lateral surface face towards the trailing edge and towards the leading edge of the blade component, respectively. In a preferred embodiment, the pultrusion plates have a length corresponding to an entire length of a spar cap for a wind turbine blade shell. In a preferred embodiment, the pultrusion plates are bonded with the blade shell material in a resin infusion process.

According to some embodiments, the method further comprises a step of arranging one or more shear webs in at least one of the shell halves, usually at the location of the reinforcing structure, i.e. the spar cap. Each shear web may comprise a web body, a first web foot flange at a first end of the web body, and a second web foot flange at a second end of the web body. In some embodiments, the shear webs are substantially I-shaped. Alternatively, the shear webs may be substantially C-shaped.

In another preferred embodiment, the pultruded blade component is an embedding element having a first end portion and a second end portion, wherein the embedding element comprises a wedge-shaped part which tapers in the direction towards the second end portion, and wherein the step of arranging the pultruded blade component within the blade shell component comprises
- alternately embedding the embedding elements and fastening members in a root region of the blade shell component, such that an embedding element is placed between each pair of adjacent fastening members, and such that the adjacent embedding elements and fastening members follow the circumference of the root region cross section, wherein a lateral face of each embedding element engages a lateral face of an adjacent fastening member.

The pultruded embedding elements are typically used in a root end structure of the blade, provided for fastening the blade to the rotor hub. Such embedding elements are typically embedded together with fastening members, such as bushings, in the root region of a shell component, such as a shell half, in between an outer shell part and an inner shell part. Usually, one embedding element is placed between each pair of adjacent bushings, such that the adjacent embedding elements and bushings follow the circumference of the root region cross section. Thereby, the lateral face of each embedding element engages a lateral face of an adjacent bushing. Subsequently, a resin material can be infused in between the outer shell part and the inner shell part for fixing the embedding elements and bushings within the shell component.

In a preferred embodiment, a concave lateral face of each embedding element engages a convex lateral face of an adjacent fastening member. The embedding element may have a first part comprising lateral faces which are substantially complementary to the lateral faces of the adjacent fastening members, such as bushings, so as to substantially abut the latter. In other words, when the fastening members have a cylindrical shape, the outer lateral surfaces of the first element part have a concave shape complimentary to the cylindrical shape of the lateral faces of the fastening members. When the lateral surfaces of the elongated fastening members are planar, the lateral surfaces of the first element part are also planar. The wedge-shaped part of the embedding element part provides a gradual transition between a relatively high wall thickness in the region of the fastening members and a normally lower wall thickness in the transition region and the airfoil region of the blade.

According to another embodiment, the embedding element comprises, or essentially consists of, a glass fibre material and the vinyl ester urethane resin of the present invention. In some embodiments, the embedding element contains not more than 15 wt%, preferably not more than 5 wt%, of material other than the glass fibre material and the vinyl ester urethane resin of the present invention relative to the total weight of the embedding element. According to another embodiment, the embedding element consists of the fibre material and the vinyl ester urethane resin of the present invention.

According to a preferred embodiment, between its two end portions the embedding element is provided with a first longitudinal lateral face extending concavely in a cross-sectional view perpendicular to the longitudinal axis of the embedding element. In a particularly preferred embodiment, between its two end portions the embedding element is provided with a second longitudinal lateral face facing opposite the first lateral face and extending concavely in a cross-sectional view perpendicular to the longitudinal axis of the embedding element. Thus, the embedding element may comprise two longitudinally extending lateral faces on either side, both of which have a concave cross section for improved contact to adjacent cylindrical bushings. In one aspect, the present invention relates to the use of the above-described embedding elements for manufacturing a wind turbine blade.

In another aspect, the present invention relates to a method of manufacturing an embedding element according to the present invention, the method comprising the steps of contacting a fibre material with the vinyl ester urethane resin of the present invention during a pultrusion process, and subsequently forming the embedding element. Said pultrusion process will typically involve drawing one or more fibre rovings, preferably glass fibre rovings into a heating station and contacting the fibre material with the multicomponent resin system of the present invention. The resulting material is usually passed through an adequately shaped nozzle to form a pultrusion string, said string having a desired cross section formed by the nozzle. A knife may cut the pultrusion string.

Accordingly, in a preferred embodiment, the method further comprises the steps of
- forming an elongated preform from the fibre material and the vinyl ester urethane resin of the present invention,
- cutting the preform along a plane, which is inclined relative to the longitudinal axis of the preform, to provide two symmetrical embedding elements, each comprising a wedge-shaped part.

In another aspect, the present invention relates to a wind turbine blade shell component, such as shell half, comprising a spar cap with the pultruded blade components comprising the fibre-reinforced vinyl ester urethane composite of the present invention. The present invention also relates to a wind turbine blade obtainable by the methods of the present invention. The blade usually has a pressure side shell half and a suction side shell half, wherein the suction and pressure side shell halves are joined along a leading and trailing edge of the blade. Typically, both the suction and pressure side shell halves further include a reinforcing structure, such as a spar cap bonded to an interior surface of the shell, wherein the spar cap includes a plurality of pultruded blade components comprising the fibre-reinforced vinyl ester urethane composite, such as pultrusion plates, according to the present invention. The pultrusion plates preferably have a continuous unbroken length along an entire length of the spar cap.

In another aspect, the present invention relates to a pultrusion plate formed of a pultrusion fibre material comprising carbon fibres and comprising the vinyl ester urethane resin of the present invention, and to a spar cap comprising a plurality of said pultrusion plates. In a preferred embodiment, the pultrusion plate has a rectangular cross section. In a preferred embodiment, the pultrusion plate has the shape of a rectangular cuboid. The pultrusion plate has a length, which typically extend in a substantially spanwise direction when the pultrusion plate is arranged in the blade shell. The pultrusion plate also has a width, which typically extends in a substantially chordwise direction when the pultrusion plate is arranged in the blade shell. The pultrusion plate also has a height or thickness, which typically extends in a substantially flapwise direction when the pultrusion plate is arranged in the blade shell. The length of the plate is typically its largest dimension. The length of the plate extends in the same direction as its longitudinal axis.

The length of the pultrusion plate is typically between 50 and 150 meters, preferably between 50 and 100 meters, more preferably between 70 and 100 meters. The height/thickness of the pultrusion plate is preferably between 2 and 10 millimeters, preferably between 3 and 7 millimeters, most preferably between 4 and 6 millimeters. The width of the plate is preferably between 20 and 300 millimeters, most preferably between 80 and 150 millimeters. In a preferred embodiment, the reinforcing structure, such as the spar cap, comprises between 1 and 15 stacks of pultrusion plates arranged next to each other, more preferably between 3 and 9 stacks. Each stack may comprise up to 20 pultrusion plates arranged on top of each other, such as 2-20 pultrusion plates or 2-10 pultrusion plates. Thus, each reinforcing section, such as each spar cap, may comprise 10 to 200 pultrusion plates.

All features and embodiments discussed above with respect to the method of manufacturing a wind turbine blade likewise apply to the pultrusion plate or to the reinforcing structure, or spar cap, of the present invention and vice versa.

In another aspect, the present invention relates to a wind turbine blade obtainable by the aforementioned method of manufacturing a wind turbine blade.

In another aspect, the present invention relates to a pultrusion process for manufacturing the pultrusion plate of the present invention, and to a pultrusion plate obtainable by said pultrusion process. Said pultrusion process preferably comprises the provision of a plurality of bobbins carrying respective tows of fibre material. Each tow is advantageously pulled through guide plates, a resin bath containing the multicomponent resin system of the present invention, and a heated die by a pulling mechanism. The continuous pultrusion string can be cut into individual pultrusion plates with a length of between 30-200 meters, preferably 50-100 meters, by a cutter. The shaped impregnated plates are then advantageously cured to form the fibre-reinforced vinyl ester urethane composite of the present invention. The guide plates and/or the die may take the form of a spreader or inlet comprising multiple apertures, each aperture receiving a respective carbon fibre tow or glass fibre tow. The apertures can be spaced and they are located so as to guide the fibre tows to form a desired pattern of glass fibre tows and carbon fibre tows in the pultrusion plates.

In another aspect, the present invention relates to a wind turbine blade for a rotor of a wind turbine, the blade having a pressure side shell half and a suction side shell half, the shell halves being joined along a leading and trailing edge of the blade, wherein each of the shell halves comprises a respective spar cap bonded to an interior surface of the respective shell half, wherein the spar cap comprises a plurality of pultruded plates comprising a carbon fibre-reinforced vinyl ester urethane composite.

In another aspect, the present invention relates to a wind turbine blade for a rotor of a wind turbine, the blade having a longitudinal direction with a tip end and a root end, the blade comprising a profiled contour including a pressure side and a suction side, as well as a leading edge and a trailing edge with a chord line having a chord length extending therebetween, the chord line transverse to said longitudinal direction, the profiled contour, when being impacted by an incident air-flow, generating a lift, the wind turbine blade further comprising a root section having a substantially circular cross-sectional profile,
wherein the root section comprises a plurality of embedding elements each having a first end portion and a second end portion, wherein the embedding element comprises a wedge-shaped part which tapers in the direction towards the second end portion, wherein each embedding element comprises a glass fibre-reinforced vinyl ester urethane composite.

In yet another aspect, the present invention relates to a method of manufacturing a wind turbine rotor blade including a shell structure of a fibre-reinforced composite material comprising fibres embedded in a polymer matrix, said method comprising the steps of
- providing a blade shell structure comprising a root region for attachment to a rotor hub, the shell structure having an outer shell part and an inner shell part,
- providing a plurality of pultruded embedding elements comprising a glass fibre-reinforced vinyl ester urethane composite and a plurality of fastening members, wherein the fastening members are arranged to be used for securing the blade to a wind turbine hub,
- alternately embedding the pultruded embedding elements and the fastening members in the root region in between the outer shell part and the inner shell part, such that an embedding element is placed between each pair of adjacent fastening members, and such that the adjacent embedding elements and fastening members follow the circumference of the root region cross section, wherein a lateral face of each embedding element engages a lateral face of an adjacent fastening member, thereby allowing access from the outside to the fastening members,
- subsequently infusing a resin in between the outer shell part and the inner shell part for fixing the embedding elements and fastening members within the shell structure.

Preferably, the fastening members are bushings. The bushings usually have a circular cross section. Usually, the bushings are cylindrical. Typically, each bushing comprises an internal thread.

The embedment of the fastening members, such as bushings, and embedding elements typically comprises the steps of securing the fastening members and/or embedding elements to the root flange of a mould part. The flange is usually a metal plate with apertures corresponding to the flange provided on the turbine hub. Fibre glass mats may be placed in between the elements to create small spacings which are subsequently infused with resin.

In one embodiment, a concave lateral face of each embedding element engages a convex lateral face of an adjacent fastening member, preferably a bushing. Even more preferred, two opposite concave lateral faces on either side of each embedding element each engage a corresponding convex lateral face of an adjacent fastening member, such as a bushing. In another embodiment, the resin infusion step comprises vacuum assisted resin transfer moulding. In another aspect, the present invention relates to a wind turbine rotor blade obtainable by the above-described manufacturing method.

As used herein, the term "spanwise" is used to describe the orientation of a measurement or element along the blade from its root end to its tip end. In some embodiments, spanwise is the direction along the longitudinal axis and longitudinal extent of the wind turbine blade.

As used herein, the term "horizontal" refers to a direction that is substantially parallel to the chord of the blade when the pultrusion plates are arranged in the blade shell. The vertical direction is substantially perpendicular to the horizontal direction, extending in a substantially flapwise direction of the blade.

As used herein the term "multicomponent resin system" includes any reaction product(s) of the components of the multicomponent resin system, such as a vinyl ester urethane resin resulting from the reaction of a vinyl ester compound with an isocyanate compound and optionally a polyol.

### Description of the Invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 is a schematic top view of a shell half of a wind turbine blade according to the present invention,
Fig. 5 is a schematic vertical cross section through part of a shell half with a reinforcing structure, such as a spar cap, of the present invention,
Fig. 6 illustrates a pultrusion process for manufacturing the pultruded blade component, such as a pultrusion plate, of the present invention,
Fig. 7 shows a perspective, longitudinal, sectional view of a portion of a root region of a wind turbine blade according to the invention,
Fig. 8 shows a perspective view of a cylindrical bushing arranged next to a pultruded embedding element of the present invention, and
Fig. 9 shows a partial cross-sectional view of a root region of a wind turbine blade according to the invention.

### Detailed description of the figures

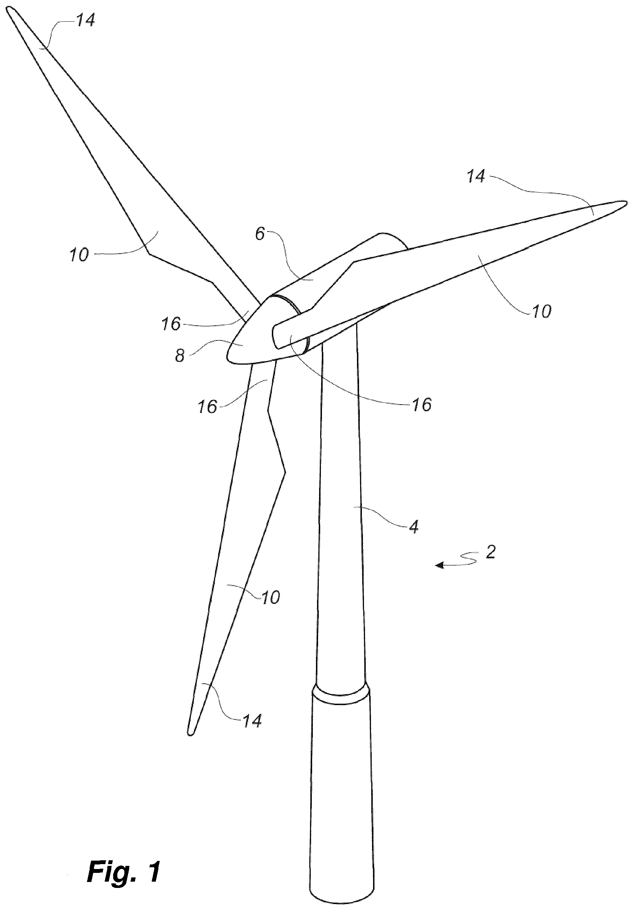

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8.

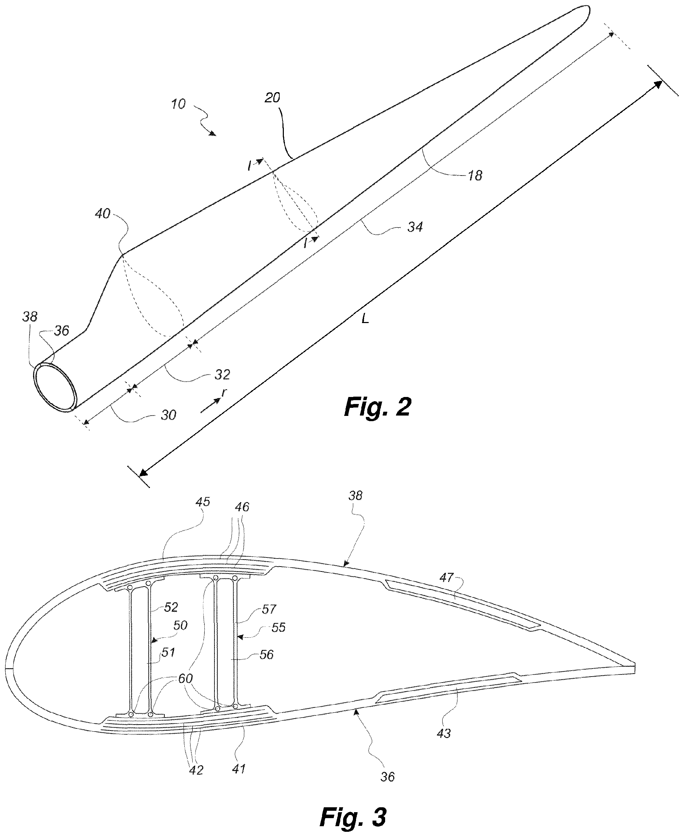

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r*from the hub. The airfoil region 34 has an airfoil profile with a chord extending between the leading edge 18 and the trailing edge 20 of the blade 10. The width of the chord decreases with increasing distance *r*from the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The blade is typically made from a pressure side shell half 36 and a suction side shell half 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell half 36 and a suction side shell half 38. The pressure side shell half 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell half 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell half 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers.

The blade shells 36, 38 may comprise further fibre-reinforcement at the leading edge and the trailing edge. Typically, the shell parts 36, 38 are bonded to each other via glue flanges.

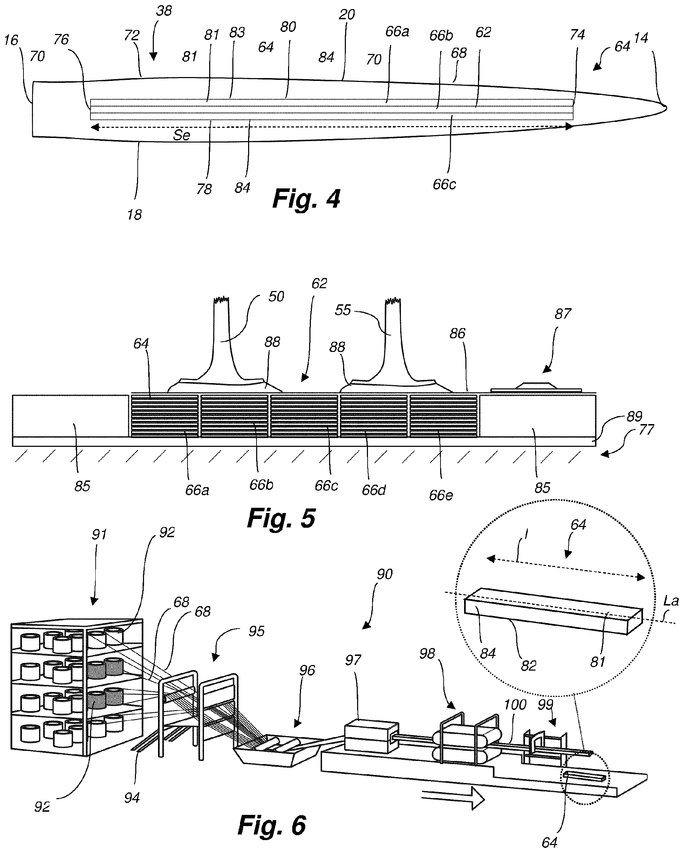

Fig. 4 is a schematic top view of a shell half 38 of a wind turbine blade according to the present invention, illustrating the location of a reinforcing structure 62, such as a spar cap, having a spanwise extent Se. In the illustrated embodiment, the reinforcing structure 62 comprises three adjacent stacks 66a, 66b, 66c of pultrusion plates. Each pultrusion plate is obtained in a pultrusion process comprising contacting a fibre material with the multicomponent resin system of the present invention, and curing the multicomponent resin system to form a fibre-reinforced vinyl ester urethane composite. As seen in Fig. 4, the elongate reinforcing structure 62 extends in a substantially spanwise direction of the blade, with adjacent stacks 66a, 66b, 66c of pultrusion plates. The elongate reinforcing structure 62 has a tip end 74, closest to the tip end of the blade, and a root end 76, closest to the root end of the blade. The elongate reinforcing structure also comprises a spanwise extending front edge 78, which is closest to the leading edge 18 of the blade, and a spanwise extending rear edge 80, which is closest to the trailing edge 20 of the blade.

Fig. 5 is a schematic vertical cross section through part of a shell half with a reinforcing structure 62 of the present invention, as seen from the root end of the blade. The reinforcing structure 62, such as a spar cap, comprises a plurality of pultrusion plates 64 according to the present invention, i.e. comprising the vinyl ester urethane resin, arranged in adjacent stacks 66a-e, which are arranged on blade shell material 89 in mould 77 for the blade shell component, such as a shell half. The stacked pultrusion plates 64 are then bonded with the blade shell material 89 to form the blade shell component, such as the shell half with the spar cap. Core material 85 can be arranged on either chordwise side of the reinforcing structure 62. A first shear web 50 and a second shear web 55 is placed on the spar cap 62 via respective bond lines 88. The stacks 66a-e may be covered by a carbon biax layer 86 or a carbon veil or a glass/carbon hybrid fabric or a glass/carbon hybrid veil extending towards current connection terminal 87 of a lightning protection system.

Fig. 6 illustrates a pultrusion process for manufacturing the pultruded blade component, which is a pultrusion plate 64 in the illustrated embodiment, of the present invention. A pultrusion system 90 comprises a portion for receiving a plurality of bobbins 92 each supplying a tow of fibre material 68 from a creel 91. Additional reinforcement material 94 may be provided. The tows 68 are pulled through guide plates 95, resin bath 96 containing the multicomponent resin system, and heated die 97 by pulling mechanism 98. The components of the multicomponent resin system, such as a vinyl ester resin and an isocyanate compound may be supplied to the resin batch by respective pump systems, or may be supplied from a pre-mix container or reservoir. The fibre material 68, e.g. carbon fibres, is contacted, e.g. impregnated, with the multicomponent resin system of the present invention, including a reaction product thereof, such as a vinyl ester urethane to form a fibre-reinforced vinyl ester urethane composite. The pultrusion string 100 can be cut into individual pultrusion plates 64 by cutter 99. The shaped impregnated fibres are cured and can optionally be wound onto a roll.

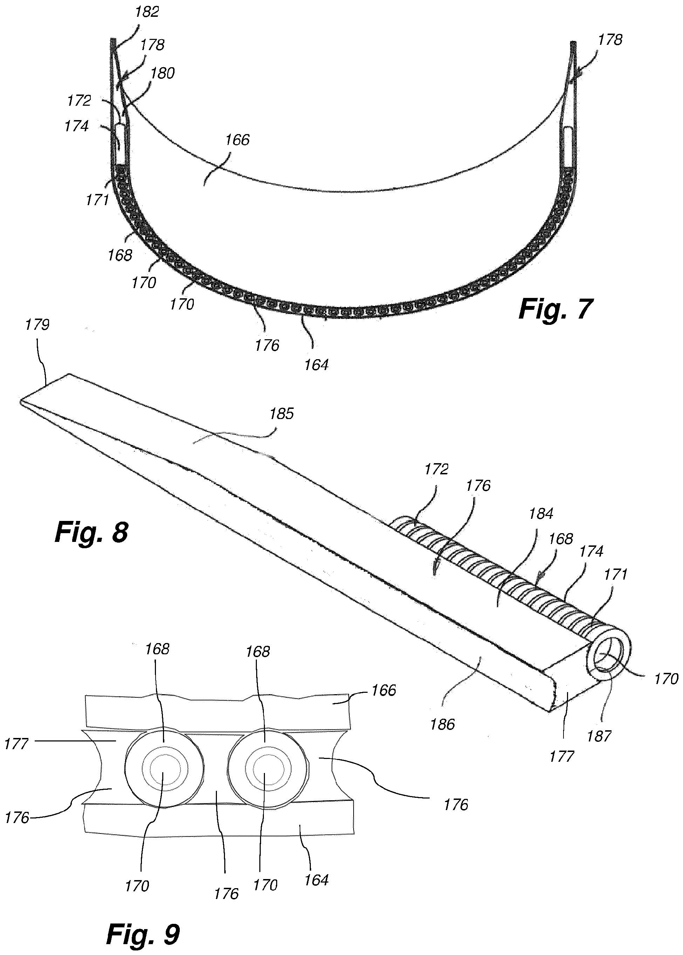

Fig. 7 illustrates another application of the pultruded blade component of the present invention. Fig. 7 shows a blade root region is formed as a shell structure which is typically ring-shaped and comprises an outer part 164 formed by a fibre-reinforced polymer matrix, typically made of glass fibres and/or carbon fibres and a resin, such as epoxy, polyester or vinyl ester. The shell structure also comprises an oppositely arranged inner part 166 being made of the same material as the outer part. Elongated bushings 168 are placed between the parts 164, 166.

As seen in Figs. 8 and 9, the bushings 168 have a circular cross section and comprise a central bore 170 with an inner thread as fastening means. Now referring to Fig. 8, the bushing 168 comprises a first end 171, an oppositely arranged second end 172 and a lateral face 174 with circular cross section in between the ends 171, 172. The first end 171 of the bushing 168 is placed at the root end face of the root region. The bushings 168 are arranged mutually spaced apart so as to substantially follow the circumference of the root region and allow access from the outside to the bushings, i.e. the threads used for mounting the blade to the hub.

As seen in Fig. 7, the bushings 168 may be further connected to a wedge-shaped extension 178 arranged behind each bushing 168 as seen in the longitudinal direction of the blade. A first end 180 of the extension 178 is arranged in abutment with the second end of the bushing 168, and a second end 182 of the extension 178 is tapered. The wedge-shaped extensions 178 may be made of balsawood or a hard polymer foam or another similar material.

In this embodiment, the pultruded blade component of the present invention is a pultruded embedding element 176 which is arranged in between adjacent bushings 168 at the root end of the shell component. A more detailed view of the pultruded embedding element 176 is shown in Fig. 8. The embedding element 176 comprises a first part 184 and a second part 185, as well as a first end portion 177 and a second end portion 179. The first part 184 essentially corresponds to the region between the lateral surface 174 of adjacent bushings 178. The first part 184 is provided with opposite longitudinal lateral faces 186, 187 formed complementary to the surface 174 of adjacent bushings. As seen in Fig. 9, the first and second lateral faces 186, 187 extend concavely in a cross-sectional view perpendicular to the longitudinal axis of the embedding element. The embedding element 176 substantially extends up next to the adjacent bushings when seen in circumferential direction.

Furthermore, the first part 184 of the embedding element 176 may extend from the first end 171 of the bushing 168 and beyond the second end 172 thereof. The second part 185 of the embedding element 176 is a wedge-shaped tapering extension of the first element part 184, which tapers in the direction towards the second end portion 179. The first part 184 may have an extent substantially corresponding to that of the bushings 168. The pultruded embedding element 176 is formed in a pultrusion process comprising contacting a fibre material, preferably a glass fibre material, with the multicomponent resin system, including a reaction product thereof, and curing the multicomponent resin system to form the pultruded embedding element as a fibre-reinforced vinyl ester urethane composite. Preferably, the multicomponent resin system comprises a vinyl ester compound and an isocyanate compound.

The invention is not limited to the embodiments described herein and may be modified or adapted without departing from the scope of the present invention.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 62: reinforcing structure
- 64: pultrusion plate
- 66: stack of pultrusion plates
- 68: tow of fibre material
- 74: tip end of reinforcing structure
- 76: root end of reinforcing structure
- 77: mould
- 78: front edge of reinforcing structure
- 80: rear edge of reinforcing structure
- 81: top surface of pultrusion plate
- 82: bottom surface of pultrusion plate
- 83: first lateral surface of pultrusion plate
- 84: second lateral surface of pultrusion plate
- 85: core material
- 86: carbon biax layer
- 87: current connection terminal
- 88: bond line
- 89: shell material
- 90: pultrusion system
- 91: creel
- 92: bobbin with tow of fibre material
- 94: additional reinforcement material
- 95: guide plate
- 96: resin bath
- 97: heated die
- 98: pulling mechanism
- 99: cutter
- 100: pultrusion string
- 164: outer part of shell
- 166: inner part of shell
- 168: bushing
- 170: central bore
- 171: first end of bushing
- 172: second end of bushing
- 174: lateral face of bushing
- 176: embedding element
- 177: first end portion of embedding element
- 178: wedge-shaped extension of bushing
- 179: second end portion of embedding element
- 180: first end of extension of bushing
- 182: second end of extension of bushing
- 184: first part of embedding element
- 185: second part of embedding element
- 186: longitudinal lateral face of embedding element
- 187: longitudinal lateral face of embedding element
- L: length
- I: length of pultrusion plate
- w: width of pultrusion plate
- h: height of pultrusion plate
- La: longitudinal axis of pultrusion plate
- r: distance from hub
- Se: spanwise extent of reinforcing structure
- Ce: chordwise extent of reinforcing structure

## Claims

1. A method of manufacturing a wind turbine blade (10), the method comprising the steps of providing a blade shell component (38),
forming at least one pultruded blade component (64, 176) in a pultrusion process comprising contacting a fibre material (68) with a multicomponent resin system, and curing the multicomponent resin system to form a fibre-reinforced vinyl ester urethane composite, and
arranging the pultruded blade component (64) within the blade shell component (38).

2. A method according to claim 1, wherein the multicomponent resin system comprises a vinyl ester compound and an isocyanate compound.

3. A method according to claim 2, wherein the vinyl ester compound comprises a monomer, oligomer or polymer containing at least one (meth)acrylate functional end group.

4. A method according to claims 2 or 3, wherein the vinyl ester compound comprises a vinyl ester resin.

5. A method according to any of the preceding claims, wherein the multicomponent resin system comprises a polyol compound.

6. A method according to any of the preceding claims, wherein the fibre material comprises carbon fibres.

7. A method according to any of the preceding claims, wherein the multicomponent resin system comprises a peroxide, such as an organic peroxide.

8. A method according to any of the preceding claims, wherein the multicomponent resin system further comprises a polymerization initiator or catalyst.

9. A method according to any of the preceding claims, wherein all components of the multicomponent resin system are pre-mixed in a container before being contacted with the fibre material in the pultrusion process.

10. A method according to any of the preceding claims, wherein the pultruded blade component is a pultrusion plate (64), and wherein the step of arranging the pultruded blade component within the blade shell component comprises arranging a plurality of the pultrusion plates (64) within the blade shell component, and bonding the pultrusion plates (64) to the blade shell component.

11. A method according to claim 10, wherein the plurality of pultrusion plates forms a spar cap of the wind turbine blade.

12. A method according to any of the preceding claims 1-9, wherein the pultruded blade component is an embedding element having a first end portion (177) and a second end portion (179), wherein the embedding element (176) comprises a wedge-shaped part (185) which tapers in the direction towards the second end portion (179), and wherein the step of arranging the pultruded blade component within the blade shell component comprises
- alternately embedding the embedding elements (176) and fastening members in a root region of the blade shell component, such that an embedding element (176) is placed between each pair of adjacent fastening members (168), and such that the adjacent embedding elements (176) and fastening members (168) follow the circumference of the root region cross section, wherein a lateral face of each embedding element (176) engages a lateral face (174) of an adjacent fastening member (168).

13. A method according to claim 12, wherein a concave lateral face of each embedding element (176) engages a convex lateral face of an adjacent fastening member.

14. A wind turbine blade for a rotor of a wind turbine, the blade having a pressure side shell half and a suction side shell half, the shell halves being joined along a leading and trailing edge of the blade, wherein each of the shell halves comprises a respective spar cap bonded to an interior surface of the respective shell half, wherein the spar cap comprises a plurality of pultruded plates comprising a carbon fibre-reinforced vinyl ester urethane composite.

15. A wind turbine blade for a rotor of a wind turbine, the blade having a longitudinal direction with a tip end and a root end, the blade comprising a profiled contour including a pressure side and a suction side, as well as a leading edge and a trailing edge with a chord line having a chord length extending therebetween, the chord line transverse to said longitudinal direction, the profiled contour, when being impacted by an incident air-flow, generating a lift, the wind turbine blade further comprising a root section having a substantially circular cross-sectional profile, wherein the root section comprises a plurality of embedding elements each having a first end portion (177) and a second end portion (179), wherein the embedding element (176) comprises a wedge-shaped part (185) which tapers in the direction towards the second end portion (179), wherein each embedding element comprises a glass fibre-reinforced vinyl ester urethane composite.
